# EUROPEAN PATENT SPECIFICATION

(11) **EP 4 505 381 B1**
(45) Date of publication and mention of the grant of the patent: **30.09.2026**
(21) Application number: 23719995.5
(22) Date of filing: 03.04.2023
(51) Int. Cl.: G06Q 10/107

(54) **REAL-TIME AUTOMATION BOT**
ECHTZEIT-AUTOMATISIERUNG BOT
BOT D'AUTOMATISATION EN TEMPS RÉEL

(30) Priority: 04.04.2022 IN 202211020307
(43) Date of publication of application: 12.02.2025
(73) Proprietor: CONCENTRIX CORPORATION, Fremont, California 94538 (US)
(72) Inventor: GAJRIA, Bhupesh, Bangalore 560066 (IN); ROY CHOWDHURY, Debasish, Bangalore 560066 (IN); MALIK, Devendra, Bangalore 560066 (IN); NIGAM, Vishesh, Bangalore 560066 (IN); V, Amara, Bangalore 560066 (IN); SAHA, Kaushik, Bangalore 560066 (IN)
(74) Representative: Köllner, Malte
(86) International application number: PCT/US2023/017261
(87) International publication number: WO 2023/196221

(56) References cited:
- WO-A1-2018/222313
- US-A1- 2021 329 128

## Description

### RELATED APPLICATIONS

This application claims priority to and the benefit of Indian Provisional Patent Application No. 202211020307, filed April 4, 2022. Indian Provisional Patent Application No. 202211020307

### FIELD

The present disclosure relates generally to obtaining and analyzing communication session data. More particularly, the present disclosure relates to a real-time automation bot configured to obtain communication session data, determine a threshold has been met, and generate a notification based on the threshold being met.

### BACKGROUND

As technology enables increasing levels of remote working and global expansion, monitoring the agents' activity for meeting metrics can become increasingly more difficult. Work from home can cause additional hurdles for oversight. In an office environment, hands-on supervision can allow for more ease in the monitoring of communication sessions; however, remote working does not afford the same luxuries. Additionally, even in person work environments can provide opportunity for limited oversight capabilities for supervisors. Publication US 2021/0329128 A1 discloses an automation solution for guiding a contact center agent during a communication session by providing contextual in-line assistance. Robotic process automation is used for automating workflows and processes with robots that capture information from multiple applications of a contact center system and generate contextual guidance for the contact center agent via callout activities during the communication session. Publication WO 2018/222313 A1 describes how coaching notifications can be determined based on current user fitness data and historical user fitness data.

### SUMMARY

Aspects and advantages of embodiments of the present disclosure will be set forth in part in the following description, or can be learned from the description, or can be learned through practice of the embodiments.

One example aspect of the present disclosure is directed to a computing system for automated tracking of communication sessions for remote users. The computing system can include one or more processors and one or more non-transitory computer-readable media that collectively store instructions that, when executed by the one or more processors, cause the computing system to perform operations. The operations can include obtaining initial data. The initial data can be associated with a begin time of a communication session. In some implementations, the communication session can include a first remote user. The operations can include determining whether a threshold time has elapsed without receiving end data of the communication session of the first remote user. The end data can be associated with an end time. The operations can include generating a first notification and a second notification based on the threshold time lapsing. In some implementations, the first notification can include one or more status indicators associated with the communication session of the first remote user. In some implementations, the second notification can include data associated with the first remote user and data associated with the communication session of the first remote user. The operations can include transmitting, via a network connection, the first notification to the first user and transmitting, via the network connection, the second notification to a supervisor of the first remote user. The operations can include generating session data. In some implementations, the session data can include information associated with the communication session of the first remote user. The operations can include storing the session data.

In some implementations, the operations can include obtaining second initial data. The second initial data can be associated with a second begin time associated with a second communication session. The second communication session can include a third user. The operations can include determining the threshold time has elapsed without receiving second end data. The second end data can be associated with a second end time associated with the second communication session. The second notification can include data associated with the communication session and the second communication session. In some implementations, the operations can include obtaining hold data. The hold data can be descriptive of a hold time associated with the first user. The operations can include determining the hold time is greater than a hold time threshold, generating a third notification and a fourth notification, transmitting via the network connection, the third notification to the first user, and transmitting, via the network connection, the fourth notification to the second user. The initial data and the end data can be obtained from a remote desktop. The one or more status indicators can be descriptive of a threshold status for the communication session.

Another example aspect of the present disclosure is directed to a computer-implemented method for real-time tracking of communication sessions for remote users and notification transmission. The method can include obtaining, via a management console application programming interface and by a computing system including one or more processors, communication session data associated with a communication session of a first remote user from a remote computing device. The method can include obtaining initial data associated with a begin time of a communication session of the first remote user. The method can include determining whether a threshold time has elapsed without receiving end data of the communication session of the first remote user. In some implementations, the end data is associated with an end time. The method can include generating based on the threshold time lapsing, by the computing system, a first notification. The first notification can be descriptive of at least a portion of the communication session data. The method can include providing, via an agent user interface and by the computing system, the first notification to the first remote user. The method can include determining, by the computing system, whether the communication session data includes time data associated with a threshold time having elapsed. The method can include generating, by the computing system, a second notification based on the threshold time having elapsed. In some implementations, the second notification can include session information. The session information can include first user data and at least a portion of the communication session data. The first user data can be associated with the first user. The method can include providing, via a supervisor user interface and by the computing system, the second notification to a supervisor.

In some implementations, the first user and the second user can be in different locations. The remote computing device can be associated with the first user. In some implementations, the communication session data can include an elapsed communication time descriptive of overall length of time of a communication session, a hold time descriptive of overall length of time of a third user being put on hold, and a wait time descriptive of overall length of time of a fourth user being put on hold.

Another example aspect of the present disclosure is directed to a computing system. The computing system can include one or more processors, a real-time automation bot, and one or more non-transitory computer-readable media that collectively store instructions that, when executed by the one or more processors, cause the computing system to perform operations. The real-time automation bot can be configured to continuously and automatically obtain time data associated with one or more communication events, and the real-time automation bot can be configured to generate one or more notifications based on the time data. The operations can include obtaining, via the real-time automation bot, a plurality of user communication datasets. In some implementations, the plurality of user communication datasets can be associated with a plurality of respective remote users. The operations can include determining, via the real-time automation bot, a plurality of statuses based on one or more thresholds. The plurality of statuses can be associated with the plurality of user communication datasets. The operations can include determining, via the real-time automation bot, one or more particular statuses of the plurality of statuses that are indicative of a particular performance status. In some implementations, the operations can include generating, via the real-time automation bot, a notification based on the one or more particular statuses. The operations can include providing, via a user interface, the notification.

In some implementations, the particular performance status can include a poor performance status as determined by comparing an elapsed time associated with a respective user communication dataset. The notification can be descriptive of one or more particular user communication datasets. The one or more particular user communication datasets can be associated with the one or more particular statuses. Providing, via the user interface, the notification can include generating a pop-up interface element descriptive of the notification and providing the pop-up interface element in the user interface.

In some implementations, providing, via the user interface, the notification can include generating a supervisor report descriptive of the notification and providing the supervisor report in the user interface. Obtaining, via the real-time automation bot, the plurality of user communication datasets can include accessing, via the real-time automation bot, a remote desktop; identifying, via the real-time automation bot, data for collection; and obtaining, via the real-time automation bot, the data for collection. Obtaining, via the real-time automation bot, the plurality of user communication datasets further can include deleting, via the real-time automation bot, the data for collection from the remote desktop in response to obtaining the data for collection.

In some implementations, the operations can include obtaining a plurality of user specific datasets associated with the plurality of respective remote users. The notification can be generated based at least in part on one or more particular user specific datasets of the plurality of user specific datasets. The one or more particular user specific datasets can be associated with the one or more particular statuses. In some implementations, the operations can include determining, via the real-time automation bot, a user trigger event occurred based at least in part on the plurality of user specific datasets; generating, via the real-time automation bot, an additional notification based on the user trigger event; and providing, via the user interface, the additional notification. The user trigger event can include one or more remote users of the plurality of respective remote users logging out of a remote user interface before a preset time.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
Figure 1 depicts a block diagram of an example computing system that performs automated tracking and notification generation according to example embodiments of the present disclosure.
Figure 2 depicts a block diagram of an example bot architecture according to example embodiments of the present disclosure.
Figure 3 depicts an illustration of an example metrics dashboard according to example embodiments of the present disclosure.
Figure 4 depicts an illustration of an example metrics dashboard according to example embodiments of the present disclosure.
Figures 5A - 5B depict illustrations of example notifications according to example embodiments of the present disclosure.
Figure 6 depicts a flow chart diagram of an example method to perform communication session data tracking according to example embodiments of the present disclosure.
Figure 7 depicts a flow chart diagram of an example method to perform communication session data tracking according to example embodiments of the present disclosure.
Figure 8 depicts a flow chart diagram of an example method to perform communication session data tracking according to example embodiments of the present disclosure.

Reference numerals that are repeated across plural figures are intended to identify the same features in various implementations.

### DETAILED DESCRIPTION

### Overview

Generally, the present disclosure is directed to systems and methods for utilizing one or more real-time automation bots to track communication sessions and generate notifications in response to one or more thresholds being met. In particular, the systems and methods can leverage the one or more real-time automation bots to quickly and efficiently large quantities of data for a plurality of remote users. Such systems and methods can help solve supervisory issues caused by the increased shift to work at home systems. For example, the systems and methods disclosed herein can include obtaining initial data. The initial data can be associated with a begin time of a communication session. In some implementations, the communication session can include a first user. The systems and methods can include determining a threshold time has elapsed without receiving end data. The end data can be associated with an end time. A first notification and a second notification can be generated based on the threshold time lapsing. In some implementations, the first notification can include one or more status indicators. The first notification can be transmitted to the first user via a network connection. The second notification can be transmitted to the second user via the network connection. Additionally and/or alternatively, the systems and methods can generate session data. The session data can include information associated with the communication session. The session data can then be stored.

The systems and methods can obtain initial data. The initial data can be associated with a begin time of a communication session. The communication session can include a first user. The first user can be an agent facilitating one or more communication sessions. The communication sessions can include a phone call, a video call, chat via a user interface, etc.

Additionally and/or alternatively, the systems and methods can determine a threshold time has elapsed without receiving end data. The end data can be associated with an end time. In some implementations, the initial data and the end data can be obtained from a remote desktop. For example, a remote desktop can aggregate communication session data from one or more communication services providers. The remote desktop can then be accessed by a server computing system.

A first notification and a second notification can be generated based on the threshold time lapsing. In some implementations, the first notification can include one or more status indicators. The one or more status indicators can be descriptive of a threshold status for the communication session. The one or more status indicators can include a color indicator (e.g., a green indicator may be descriptive of the communication session being below a threshold time and a red indicator may be descriptive of the communication session elapsing the threshold time).

The first notification can be transmitted to the first user. The transmission can occur via a network. In some implementations, the first notification may be provided in an agent user interface. The first notification may be provided as a pop-up display and can include the elapsed time for the communication session.

The second notification can be transmitted to a second user. The second user can be a supervisor for the agent. The supervisor can be located in a different location than the first user. In some implementations, the first user and the second user may be communicatively connected via an internet connection. The transmission can occur via the network. In some implementations, the second notification may be provided in a supervisor user interface. The second notification may be provided as a pop-up display and can include the elapsed time for the communication session. The second notification can be provided in a report that lists data associated with a plurality of first users in a plurality of communication sessions.

The systems and methods can generate session data. The session data can include information associated with the communication session. In some implementations, the session data can be descriptive of the begin time and the end time of the talk time, the hold time, the wait time, and/or the wrap time.

The session data can be stored. In some implementations, the session data can be stored in a database for retrieval for future reports, for additional metric generation, or for determining new thresholds.

In some implementations, the systems and methods can include obtaining second initial data. The second initial data can be associated with a second begin time associated with a second communication session. The second communication session can include a third user. The third user can be a second agent under the supervision of the second user. The systems and methods can include determining the threshold time has elapsed without receiving second end data. The second end data can be associated with a second end time associated with the second communication session. The second notification can include data associated with the communication session and the second communication session.

Alternatively and/or additionally, the systems and methods can obtain hold data. The hold data can be descriptive of a hold time associated with the first user. The hold time can be processed to determine the hold time is greater than a hold time threshold. A third notification and a fourth notification can be generated in response to the determination. The third notification can be provided to the first user (e.g., via the agent user interface), and the fourth notification can be provided to the second user (e.g., via the supervisor user interface).

Alternatively and/or additionally, the systems and methods can include obtaining, via a management console application programming interface, communication session data from a remote computing device. A first notification can be generated based on the communication session data. In some implementations, the first notification can be descriptive of at least a portion of the communication session data. The systems and methods can provide, via an agent user interface, the first notification to a first user. Additionally and/or alternatively, the systems and methods can determine the communication session data includes time data associated with a threshold time being met. A second notification can be generated based on the threshold time being met. In some implementations, the second notification can include session information. The session information can include first user data and at least a portion of the communication session data. The first user data can be associated with the first user. The systems and methods can provide, via a supervisor user interface, the second notification to a second user.

In some implementations, a management console application programming interface can be utilized to obtain communication session data from a remote computing device. The remote computing device can be associated with the first user. The remote computing device can be communicatively connected to a phone device.

The communication session data can include an elapsed communication time descriptive of overall length of time of a communication session, a hold time descriptive of overall length of time of a third user being put on hold, and a wait time descriptive of overall length of time of a fourth user being put on hold. In some implementations, the third user and the fourth user can be the same person. Alternatively and/or additionally, the third user and the fourth user can be different people.

A first notification can then be generated based on the communication session data. The first notification can be descriptive of at least a portion of the communication session data. The first notification can include the overall length of time, the hold time, and/or the wait time.

The first notification can be provided to a first user via an agent user interface. The first notification can be provided via a pop-up graphical element in the agent user interface. Alternatively and/or additionally, the first notification may be provided via a widget and/or gadget in the agent user interface.

Additionally and/or alternatively, the systems and methods can determine the communication session data includes time data associated with a threshold time being met. The threshold time can be set manually or via automatic determination (e.g., the threshold time can be determined based at least in part on aggregated data from a plurality of past communication sessions). For example, in some implementations, the standard deviation for communication session times can be determined. The standard deviation can then be utilized to determine an appropriate threshold time for flagging irregular events.

A second notification can then be generated based on the threshold time being met. The second notification can include session information. The session information can include first user data and at least a portion of the communication session data. In some implementations, the first user data can be associated with the first user.

The second notification can be provided to a second user via a supervisor user interface. In some implementations, the first user and the second user can be in different locations. For example, the first user can be an agent that is remotely working, and the second user can be a supervisor located in their own respective remote location.

In some implementations, the systems and methods disclosed herein can include a real-time automation bot. The real-time automation bot can be configured to continuously and automatically obtain time data associated with one or more communication events. In some implementations, the real-time automation bot can be configured to generate one or more notifications based on the time data. The real-time automation bot can be utilized to obtain a plurality of user communication datasets. The plurality of user communication datasets can be associated with a plurality of respective remote users. The systems and methods can determine, via the real-time automation bot, a plurality of statuses based on one or more thresholds. The plurality of statuses can be associated with the plurality of user communication datasets. Additionally and/or alternatively, the systems and methods can determine, via the real-time automation bot, one or more particular statuses of the plurality of statuses that are indicative of a particular performance status. The systems and methods can include generating, via the real-time automation bot, a notification based on the one or more particular statuses. The notification can be provided via a user interface.

The systems and methods disclosed herein can include a real-time automation bot. The real-time automation bot can be configured to continuously and automatically obtain time data associated with one or more communication events. In some implementations, the real-time automation bot can be configured to generate one or more notifications based on the time data. Additionally and/or alternatively, the real-time automation bot can include three sub-blocks: a console bot, an agent bot, and a supervisor bot.

In some implementations, the systems and methods can include obtaining, via the real-time automation bot, a plurality of user communication datasets. The plurality of user communication datasets can be associated with a plurality of respective remote users. Additionally and/or alternatively, the plurality of user communication datasets can be associated with a plurality of respective communication sessions.

Obtaining, via the real-time automation bot, the plurality of user communication datasets can include accessing a remote desktop, identifying data for collection, and obtaining the data for collection. In some implementations, in response to obtaining the data for collection, the real-time automation bot can delete the data for collection from the remote desktop.

The systems and methods can determine, via the real-time automation bot, a plurality of statuses based on one or more thresholds. The plurality of statuses can be associated with the plurality of user communication datasets. In some implementations, each status can be associated with a different respective communication session.

Additionally and/or alternatively, the systems and methods can include determining, via the real-time automation bot, one or more particular statuses of the plurality of statuses that are indicative of a particular performance status. The particular performance status can include a poor performance status as determined by comparing an elapsed time associated with a respective user communication dataset.

A notification can then be generated based on the one or more particular statuses. The notification can be descriptive of one or more particular user communication datasets. Additionally and/or alternatively, the one or more particular user communication datasets can be associated with the one or more particular statuses.

The notification can be provided via a user interface. For example, the systems and methods can generate a pop-up interface element descriptive of the notification and can provide the pop-up interface element in the user interface. Alternatively and/or additionally, the systems and methods can generate a supervisor report descriptive of the notification and can provide the supervisor report in the user interface.

In some implementations, the systems and methods can include obtaining a plurality of user specific datasets associated with the plurality of respective remote users. The notification can be generated based at least in part on one or more particular user specific datasets of the plurality of user specific datasets. In some implementations, the one or more particular user specific datasets can be associated with the one or more particular statuses.

Additionally and/or alternatively, the systems and methods can include determining, via the real-time automation bot, a user trigger event occurred based at least in part on the plurality of user specific datasets. The systems and methods can then generate, via the real-time automation bot, an additional notification based on the user trigger event. The additional notification can be provided via the user interface. In some implementations, the user trigger event can include one or more remote users of the plurality of remote users logging out of a remote user interface before a preset time.

In some implementations, the communication session data can include talk time data, hold time data, and wrap time data. Talk time data can be descriptive of the time during a call in which the first user and a third party are connected and not on hold. Hold time data can be descriptive of the time the first user and the third party are connected but the third party is put on hold. Wrap time data can be descriptive of the time after the call occurred in which the first user is inserting notes associated with the call and the particular third party user. In some implementations, the talk time, the hold time, and the wrap time may be utilized to calculate one or more efficiency metrics. The efficiency metrics can then be graphed to provide a graphical representation of the efficiency of the respective agents or the efficiency of the group of agents as a whole.

In some implementations, the notifications generated and provided by the systems and methods disclosed herein can be snoozed or hidden in response to a selection of a graphical element by a user. The snooze can temporarily hide or minimize the notification until a new event occurs or until a certain amount of time has elapsed.

Additionally and/or alternatively, new data can be fetched every five seconds to further update the notifications. Alternatively and/or additionally, the data may be collected at other frequencies.

In some implementations, the notification to the second user (e.g., the notification to the supervisor) may only occur when the system determines the first user needs help. The determination can be based on one or more thresholds that can be set by a first user, a second user, and/or may be set by automated processing that sets a threshold for outlier events.

Additionally and/or alternatively, the systems and methods disclosed herein can be utilized to monitor the work times of a plurality of remote users. For example, the systems and methods can obtain data indicative of time-in and time-outs of users. The data can then be processed to determine whether the respective user clocked-in on time and whether the respective user clocked-out on time. In response to a user clocking-in late or clocking-out early, a notification can be generated and provided to the supervisor.

The systems and methods can include a management module, an agent module, and a supervisor module. The management module can include secure shell (SSH) connectivity, a module for data extraction, and a module for data upload. The secure shell (SSH) connectivity can include a communication protocol between a computing device and a communication server system. The module for data extraction and/or the module for data upload can include a console bot that is configured to obtain the data, process the data, generate output data, and provide instructions for transmitting the output data. The agent module can include a module for pop-up generator. In some implementations, the agent module can include an agent bot for obtaining incoming data and providing a pop-up notification via an agent user interface. The supervisor module can include a module for pop-up generator. In some implementations, the supervisor module can include a supervisor bot for obtaining incoming data and providing a pop-up notification via a supervisor user interface.

The systems and methods of the present disclosure provide a number of technical effects and benefits. As one example, the system and methods can provide systems and methods for obtaining a plurality of datasets associated with a plurality of different communications sessions. The plurality of datasets can be processed to determine a status for the plurality of communications sessions. The statuses can then be utilized to generate reports and notifications to be sent to one or more users.

Another technical benefit of the systems and methods of the present disclosure is the ability to leverage one or more bots to automatically track actions of remote users to be utilized for remote supervision. For example, the systems and methods can track remote user actions and determine if one or more thresholds are met using one or more real-time automation bots.

Another example of technical effect and benefit relates to improved computational efficiency and improvements in the functioning of a computing system. For example, the systems and methods disclosed herein can leverage one or more real-time automation bots to facilitate the collection and analysis of data from a plurality of users. Additionally and/or alternatively, the real-time automation bot can facilitate the deletion of data from a server computing system post processing. The automated processing then deletion can allow for the freeing up of storage to be replaced by new data.

With reference now to the Figures, example embodiments of the present disclosure will be discussed in further detail.

### Example Devices and Systems

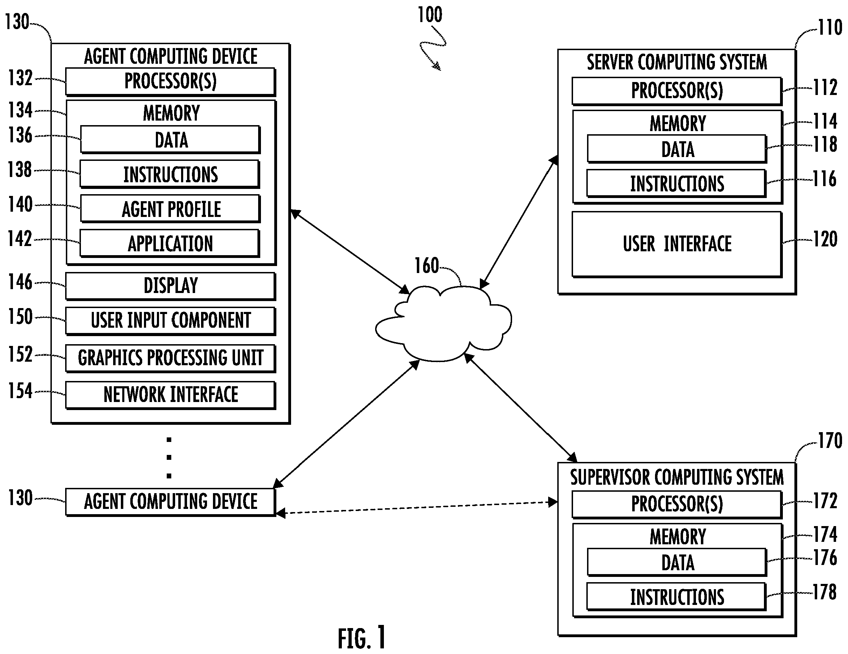

Figure 1 depicts an exemplary computing system 100 that can be used to implement a real-time automation bot according to aspects of the present disclosure. The system 100 has an agent-supervisor-server architecture that includes a server 110 that communicates with one or more agent computing devices 130 over a network 160. However, the present disclosure can be implemented using other suitable architectures. The system 100 can also have a supervisor computing system 170 to receive and provide a notification in response to processing the communication session data using the computing system 100.

The system 100 includes a server 110, such as, for example, a web server. The server 110 can be one or more computing devices that are implemented as a parallel or distributed computing system. In particular, multiple computing devices can act together as a single server 110. The server 110 can have one or more processor(s) 112 and a memory 114. The server 110 can also include a network interface used to communicate with one or more remote computing devices (e.g., agent computing devices) 130 over a network 160.

The processor(s) 112 can be any suitable processing device, such as a microprocessor, microcontroller, integrated circuit, or other suitable processing device. The memory 114 can include any suitable computing system or media, including, but not limited to, non-transitory computer-readable media, RAM, ROM, hard drives, flash drives, or other memory devices. The memory 114 can store information accessible by processor(s) 112, including instructions 116 that can be executed by processor(s) 112. The instructions 116 can be any set of instructions that when executed by the processor(s) 112, cause the processor(s) 112 to provide desired functionality.

In particular, the instructions 116 can be executed by the processor(s) 112 to implement a user interface 120. The user interface 120 can be configured to provide an interface for an agent and/or a supervisor to interact with a server platform with metric reports and profiles. In some implementations, the user interface 120 can be configured to provide instructions to a supervisor computing system 170 to perform a notification service (e.g., instructions to generate and/or provide a notification based on communication session data). In particular, in some implementations, the user interface 120 can be provided for interaction with a user using an agent computing system 130 that communicates with the server computing system 110 via a network 160.

It will be appreciated that the term "element" can refer to computer logic utilized to provide desired functionality. Thus, any element, function, and/or instructions can be implemented in hardware, application specific circuits, firmware and/or software controlling a general purpose processor. In one implementation, the elements or functions are program code files stored on the storage device, loaded into memory and executed by a processor or can be provided from computer program products, for example computer executable instructions, that are stored in a tangible computer-readable storage medium such as RAM, hard disk or optical or magnetic media.

Memory 114 can also include communication session data 118 that can be retrieved, manipulated, created, or stored by processor(s) 112. Communication session data 118 can include a time data (e.g., a talk time, a hold time, and/or wrap time). As an example, communication session data 118 can be used to determine whether a notification should be generated and provided.

The communication session data 118 can be stored in one or more databases. The one or more databases can be connected to the server 110 by a high bandwidth LAN or WAN, or can also be connected to server 110 through a network 160. The one or more databases can be split up so that they are located in multiple locales.

The server 110 can exchange data with one or more agent computing devices 130 over the network 160. Although two agents 130 are illustrated in FIG. 1, any number of agent computing devices 130 can be connected to the server 110 over the network 160. The agent computing devices 130 can be any suitable type of computing device, such as a general purpose computer, special purpose computer, navigational device, laptop, desktop, integrated circuit, mobile device, smartphone, tablet, wearable-computing devices, a display with one or more processors coupled thereto and/or embedded therein, or other suitable computing device. Further, an agent computing device 130 can be multiple computing devices acting together to perform operations or computing actions.

Similar to server 110, an agent computing device 130 can include a processor(s) 132 and a memory 134. The memory 134 can store information accessible by processor(s) 132, including instructions that can be executed by processor(s) and data. As an example, memory 134 can store an agent profile element 140 and an application element 142.

Agent profile element 140 can provide instructions for implementing an agent profile. In particular, the user of agent computing device 130 can exchange data with server 110 by using the stored agent profile to auto-populate agent information in an interface or interaction. The user interface of the present disclosure can be provided as an element of an agent user interface of the application disclosed herein.

Application element 142 can provide instructions for running a specialized application on agent computing device 130. In particular, the specialized application can be used to exchange data with server 110 over the network 160 or provide a notification to the agent. Application element 142 can include client-device-readable code for providing and implementing aspects of the present disclosure. For example, application element 142 can provide instructions for implementing a pop-up graphical element descriptive of the notification.

Although Figure 1 depicts the agent profile element 140 and the application element 142 being stored in the memory 134 of the computing device, in some implementations, the agent profile element 140 and/or the application element 142 may be stored in the memory 114 of the server computing system 110. Additionally and/or alternatively, the server computing system 110 can include a cloud computing system.

The agent computing device 130 can include various user input devices 150, or input components, for receiving information from a user, such as a touch screen, touch pad, data entry keys, speakers, mouse, motion sensor, and/or a microphone suitable for voice recognition. In some implementations, the server computing system 110 and the supervisor computing system 170 can include their own input components or may share one or more input components with the agent computing device 130, such that a user may be able to provide input for the supervisor computing system 170 using the input devices 150 of the agent computing device. Further, the agent computing device 130 can have a display 146 for presenting information, such as providing a user interface for receiving notifications and displaying communication session data. The display 146 can be a visual display including a plurality of visual components for providing the graphical elements of the plate third party interface to a user. The visual display can include a liquid crystal display (LCD), a light-emitting diode display (LED), a plasma display, an organic light-emitting diode display (OLED), and/or a cathode ray tube display (CRT).

The agent computing device 130 can further include a graphics processing unit 152. Graphics processing unit 152 can be used by processor 132 to provide an agent user interface. In some embodiments, agent computing device 130 and/or the server computing system 110 can be communicatively connected to provide the agent user interface.

The agent computing device 130 can include a network interface 154 for communicating with server 110 over network 160. Network interface 154 can include any components or configuration suitable for communication with server 110 over network 160, including, for example, one or more ports, transmitters, wireless cards, controllers, physical layer components, or other items for communication according to any currently known or future developed communications protocol or technology.

The network 160 can be any type of communications network, such as a local area network (e.g., intranet), wide area network (e.g., Internet), or some combination thereof. The network 160 can also include a direct connection between an agent computing device 130 and the server 110. In general, communication between the server 110 and an agent computing device 130 can be carried via network interface using any type of wired and/or wireless connection, using a variety of communication protocols (e.g., TCP/IP, HTTP), encodings or formats (e.g., HTML, XML), and/or protection schemes (e.g., VPN, secure HTTP, SSL).

In some implementations, the network 160 can be used to transfer communication between the server computing system 110 to the supervisor computing system 170 and/or the agent computing device 130. The communications can be instructions 138 generated in response to processing communication session data associated with an agent. For example, the agent computing device 130 may receive data descriptive of a notification from the server computing system110. Instructions 116 can also be generated that can be interpreted by the supervisor computing system 170 to generate and/or provide a notification. Moreover, in some implementations, the instructions 118 can be processed by the one or more processors 172 of the supervisor computing system 170 in order to understand the instructions. The instructions can be saved to memory or interpreted into a more native format for the supervisor user interface. The supervisor computing system can further include memory components 174 for locally storing data 176 and instructions 178. The stored data 176 can include data specific to the supervisor and/or one or more agents being supervised including agent metrics, communication session reports, and/or aggregate metrics. In some implementations, the stored data 176 can include past instructions, information necessary for interpretation, and/or localized models. The stored instructions 178 can include predetermined functions, user-generated functions, and/or trained functions for various tasks the supervisor computing system can complete. For example, the stored instructions 178 can include a plurality of instructions for processing incoming data to generate and/or provide reports and/or notifications based on the communication session data.

In some implementations, one or more non-transitory computer readable media that collectively store instructions that, when executed by the one or more processors, cause the supervisor computing system to perform operations can be included in the computing system. In some implementations, the memory components of the agent computing device 130, the server computing system 110, and the supervisor computing system 170 can include the one or more non-transitory computer readable media. The stored instructions can include instructions that cause one or more of the computing systems to perform operations that can include the methods and processes disclosed herein.

In some implementations, one or more of the computing systems can leverage one or more application programming interfaces for automating application interactions. For example, in some implementations, the server computing system 110 may generate and/or store one or more application programming interfaces to facilitate communications with one or more supervisor computing system 170 applications. Moreover, in some implementations, the one or more application programming interface may be generated in response to one or more user interactions via the user interface 120 and/or the network interface 154.

### Example Model Arrangements

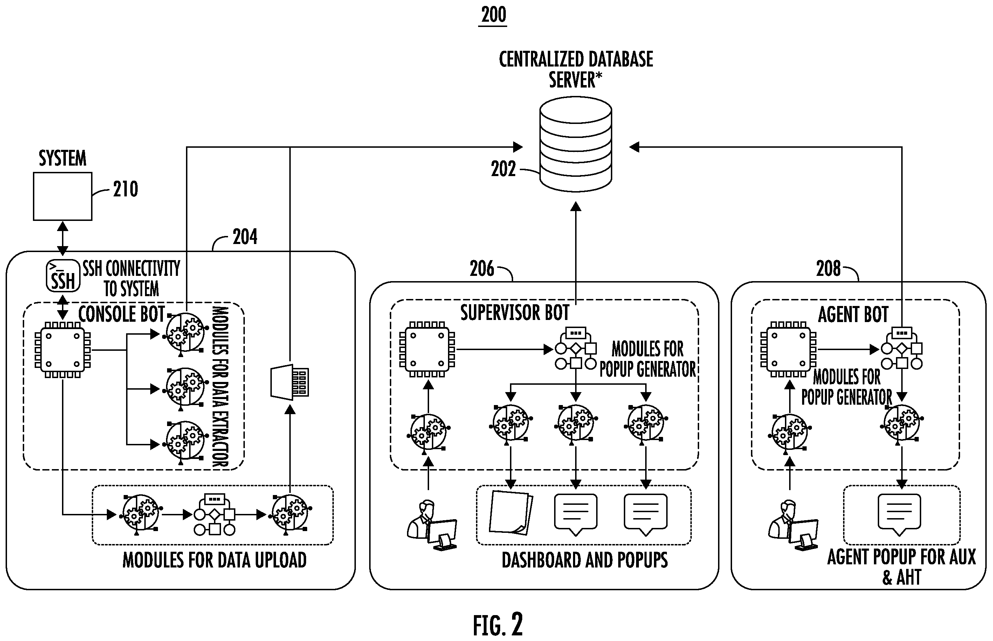

Figure 2 depicts a block diagram of an example bot architecture 200 according to example embodiments of the present disclosure. In some implementations, the bot architecture 200 is configured to receive a set of input data descriptive of a communication session from a communication server system 210 via SSH connectivity and, as a result of receipt of the input data, provide output data that includes one or more notifications. Thus, in some implementations, the bot architecture 200 can include a management block 204 that is operable to obtain and analyze the communication session data, an agent block 208 that is operable to generate and/or provide a notification to the agent, and a supervisor block 206 that is operable to generate and/or provide a notification to the supervisor.

In particular, the example bot architecture 200 can include a management block 204 that includes a module for data extractor and a module for data upload. Additionally and/or alternatively, the management block 204 can include a console bot configured to obtain communication session data from a communication server system 210 via the SSH connectivity. The console bot can then facilitate the processing of the communication session data to determine if a threshold time has elapsed. The obtained data and the generated data can be transmitted to a centralized database server 202. The obtained data and/or the generated data can then be transmitted to the supervisor block 206 and the agent block 208.

The supervisor block 206 can include a module for popup generator and a supervisor bot. The supervisor bot can be configured to obtain the data associated with the determined trigger event in order to generate a pop-up notification descriptive of the communication session. The pop-up notification can be provided in a user interface dashboard and/or in a separate window.

The agent block 208 can include a module for popup generator and an agent bot. The agent bot can be configured to obtain the data associated with the determined trigger event in order to generate a pop-up notification descriptive of the communication session. The pop-up notification can be provided in a user interface dashboard and/or in a separate window.

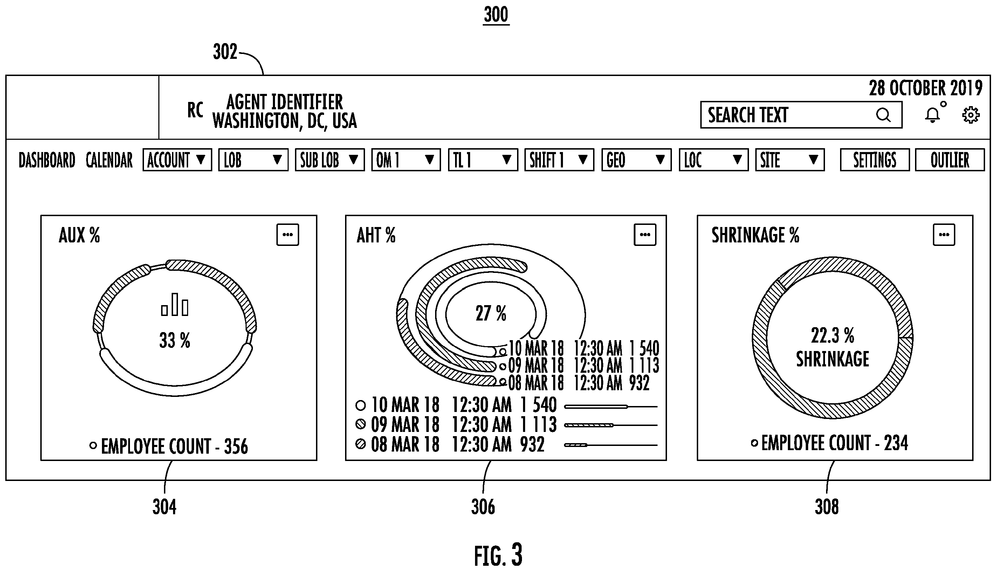

Figure 3 depicts an illustration of an example metrics dashboard 300 according to example embodiments of the present disclosure. In particular, Figure 3 can depict an example metrics dashboard 300 descriptive of three different metrics 304, 306, & 308. The metrics dashboard 300 can include a profile identifier 302 which may be fixed for the agent and may be selectable from a drop-down menu for supervisors. The metrics can be provided with a variety of representations. For example, the auxiliary data metrics 304 can be provided with a percentage of overall time along with a representation of the percentage makeup. The average hunter data metrics 306 (e.g., a time associated with the talk time, the hold time, and the wrap time) can be provided with multiple progress bars associated with different days along with relative percentages. Additionally and/or alternatively, other metrics 308 (e.g., shrinkage percentage) may be similarly provided with a numerical value and a graphical representation.

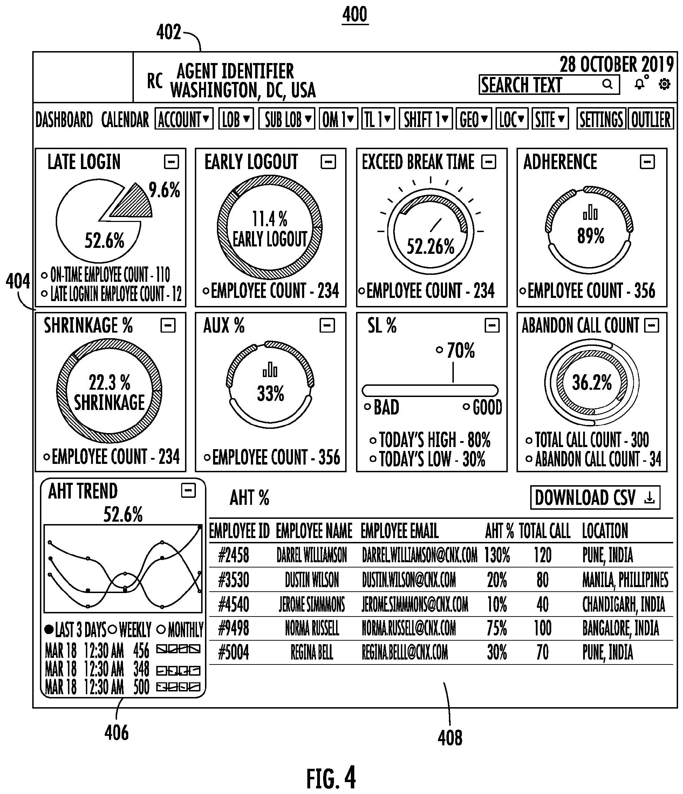

Figure 4 depicts an illustration of an example metrics dashboard 400 according to example embodiments of the present disclosure. Similarly to Figure 3, Figure 4 can depict a metrics dashboard 400 with a plurality of metric representations and values. In particular, Figure 4 can include an agent profile identifier 402, a plurality of metric graphical elements 404, trend data 406, and a log table 408. The different user interface elements can enable an agent and/or a supervisor to understand the efficiencies and deficiencies in a particular communication session, a particular workday, and/or a particular aggregated period of time. The user interface can look the same for the agents and the supervisors. Alternatively and/or additionally, the user interface may look different for agents and supervisors.

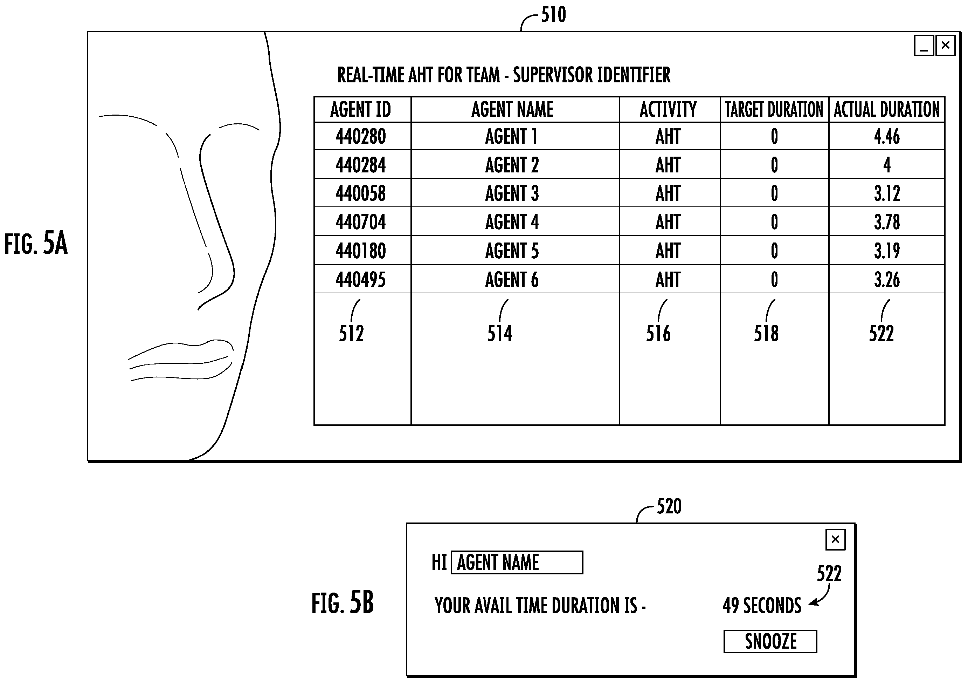

Figures 5A - 5B depict illustrations of example notifications according to example embodiments of the present disclosure. In particular, Figure 5A can depict an example report notification 510 for a supervisor. The example report notification 510 can include a list of agents that have trigger events as determined by a threshold time being reached. In some implementations, the report notification 510 can include agent IDs 512, agent names 514, the activity that met the threshold 516, the target for that metric 518, and the actual duration of the occurrence.

Figure 5B can depict an example agent notification 520. In some implementations, the example agent notification 520 can be provided and/or updated at a pre-determined interval. The agent notification 520 can include the agent's name and the time duration 522 for the particular communication session. In some implementations, the time duration 522 can include an indicator descriptive of the status of the event. For example, the indicator can be a color (e.g., green for under the threshold and red for above the threshold) and/or a symbol (e.g., a checkmark for under the threshold and an "x" for over the threshold).

### Example Methods

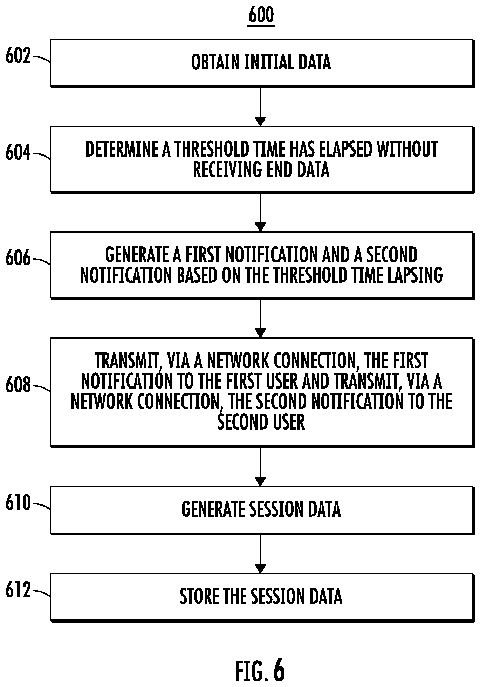

Figure 6 depicts a flow chart diagram of an example method to perform according to example embodiments of the present disclosure. Although Figure 6 depicts steps performed in a particular order for purposes of illustration and discussion, the methods of the present disclosure are not limited to the particularly illustrated order or arrangement. The various steps of the method 600 can be omitted, rearranged, combined, and/or adapted in various ways without deviating from the scope of the present disclosure.

At 602, a computing system can obtain initial data. The initial data can be associated with a begin time of a communication session. The communication session can include a first user. The first user can be an agent facilitating one or more communication sessions. The communication sessions can include a phone call, a video call, chat via a user interface, etc.

At 604, the computing system can determine a threshold time has elapsed without receiving end data. The end data can be associated with an end time. In some implementations, the initial data and the end data can be obtained from a remote desktop. For example, a remote desktop can aggregate communication session data from one or more communication services providers. The remote desktop can then be accessed by a server computing system.

At 606, the computing system can generate a first notification and a second notification based on the threshold time lapsing. In some implementations, the first notification can include one or more status indicators. The one or more status indicators can be descriptive of a threshold status for the communication session. The one or more status indicators can include a color indicator (e.g., a green indicator may be descriptive of the communication session being below a threshold time and a red indicator may be descriptive of the communication session elapsing the threshold time).

At 608, the computing system can transmit, via a network connection, the first notification to the first user and transmit, via a network connection, the second notification to the second user. The transmission can occur via a network. In some implementations, the first notification may be provided in an agent user interface. The first notification may be provided as a pop-up display and can include the elapsed time for the communication session. The second user can be a supervisor for the agent. The supervisor can be located in a different location than the first user. In some implementations, the first user and the second user may be communicatively connected via an internet connection. The transmission can occur via the network. In some implementations, the second notification may be provided in a supervisor user interface. The second notification may be provided as a pop-up display and can include the elapsed time for the communication session. The second notification can be provided in a report that lists data associated with a plurality of first users in a plurality of communication sessions.

At 610, the computing system can generate session data. The session data can include information associated with the communication session. In some implementations, the session data can be descriptive of the begin time and the end time of the talk time, the hold time, the wait time, and/or the wrap time.

At 612, the computing system can store the session data. In some implementations, the session data can be stored in a database for retrieval for future reports, for additional metric generation, or for determining new thresholds.

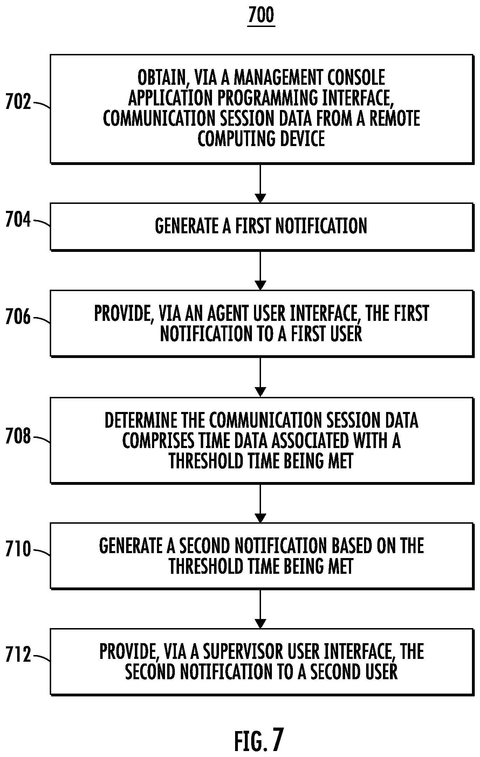

Figure 7 depicts a flow chart diagram of an example method to perform according to example embodiments of the present disclosure. Although Figure 7 depicts steps performed in a particular order for purposes of illustration and discussion, the methods of the present disclosure are not limited to the particularly illustrated order or arrangement. The various steps of the method 700 can be omitted, rearranged, combined, and/or adapted in various ways without deviating from the scope of the present disclosure.

At 702, a computing system can obtain, via a management console application programming interface, communication session data from a remote computing device. The remote computing device can be associated with the first user. The remote computing device can be communicatively connected to a phone device.

The communication session data can include an elapsed communication time descriptive of overall length of time of a communication session, a hold time descriptive of overall length of time of a third user being put on hold, and a wait time descriptive of overall length of time of a fourth user being put on hold. In some implementations, the third user and the fourth user can be the same person. Alternatively and/or additionally, the third user and the fourth user can be different people.

At 704, the computing system can generate a first notification. The first notification can be descriptive of at least a portion of the communication session data. The first notification can include the overall length of time, the hold time, and/or the wait time.

At 706, the computing system can provide, via an agent user interface, the first notification to a first user. The first notification can be provided via a pop-up graphical element in the agent user interface. Alternatively and/or additionally, the first notification may be provided via a widget and/or gadget in the agent user interface.

At 708, the computing system can determine the communication session data comprises time data associated with a threshold time being met. The threshold time can be set manually or via automatic determination (e.g., the threshold time can be determined based at least in part on aggregated data from a plurality of past communication sessions). For example, in some implementations, the standard deviation for communication session times can be determined. The standard deviation can then be utilized to determine an appropriate threshold time for flagging irregular events.

At 710, the computing system can generate a second notification based on the threshold time being met. The second notification can include session information. The session information can include first user data and at least a portion of the communication session data. In some implementations, the first user data can be associated with the first user.

At 712, the computing system can provide, via a supervisor user interface, the second notification to a second user. In some implementations, the first user and the second user can be in different locations. For example, the first user can be an agent that is remotely working, and the second user can be a supervisor located in their own respective remote location.

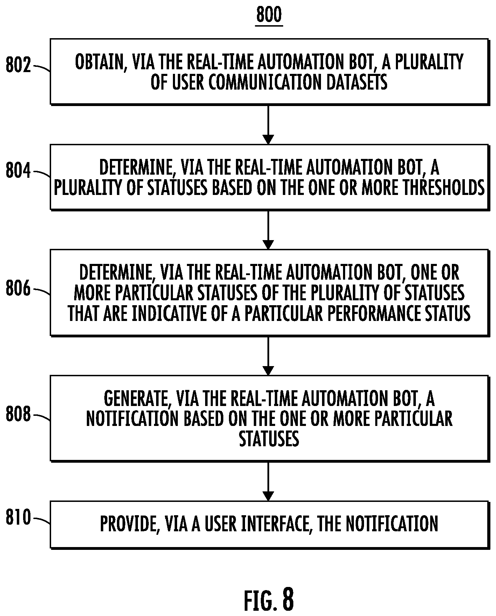

Figure 8 depicts a flow chart diagram of an example method to perform according to example embodiments of the present disclosure. Although Figure 8 depicts steps performed in a particular order for purposes of illustration and discussion, the methods of the present disclosure are not limited to the particularly illustrated order or arrangement. The various steps of the method 800 can be omitted, rearranged, combined, and/or adapted in various ways without deviating from the scope of the present disclosure.

At 802, a computing system can obtain, via the real-time automation bot, a plurality of user communication datasets. The plurality of user communication datasets can be associated with a plurality of respective remote users. Additionally and/or alternatively, the plurality of user communication datasets can be associated with a plurality of respective communication sessions.

Obtaining, via the real-time automation bot, the plurality of user communication datasets can include accessing a remote desktop, identifying data for collection, and obtaining the data for collection. In some implementations, in response to obtaining the data for collection, the real-time automation bot can delete the data for collection from the remote desktop.

At 804, the computing system can determine, via the real-time automation bot, a plurality of statuses based on one or more thresholds. The plurality of statuses can be associated with the plurality of user communication datasets. In some implementations, each status can be associated with a different respective communication session.

At 806, the computing system can determine, via the real-time automation bot, one or more particular statuses of the plurality of statuses that are indicative of a particular performance status. The particular performance status can include a poor performance status as determined by comparing an elapsed time associated with a respective user communication dataset.

At 808, the computing system can generate, via the real-time automation bot, a notification based on the one or more particular statuses. The notification can be descriptive of one or more particular user communication datasets. Additionally and/or alternatively, the one or more particular user communication datasets can be associated with the one or more particular statuses.

At 810, the computing system can provide, via a user interface, the notification. For example, the systems and methods can generate a pop-up interface element descriptive of the notification and can provide the pop-up interface element in the user interface. Alternatively and/or additionally, the systems and methods can generate a supervisor report descriptive of the notification and can provide the supervisor report in the user interface.

### Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

## Claims

1. A computing system for automated tracking of communication sessions for remote users, the computing system comprising:
A) one or more processors; and
B) one or more non-transitory computer-readable media that collectively store instructions that, when executed by the one or more processors, cause the computing system to perform operations, the operations comprising:
B1) obtaining initial data, wherein the initial data is associated with a begin time of a communication session of a first remote user;
B2) determining whether a threshold time has elapsed without receiving end data of the communication session of the first remote user, wherein the end data is associated with an end time;
B3) generating a first notification and a second notification based on the threshold time lapsing,
B3.1) wherein the first notification comprises one or more status indicators associated with the communication session of the first remote user;
B3.2) wherein the second notification comprises data associated with the first remote user and data associated with the communication session of the first remote user;
B4) transmitting, via a network connection, the first notification to the first remote user;
B5) transmitting, via the network connection, the second notification to a supervisor of the first remote user;
B6) generating session data, wherein the session data comprises information associated with the communication session of the first remote user; and
B7) storing the session data.

2. The computing system of claim 1, wherein the operations further comprise:
obtaining second initial data, wherein the second initial data is associated with a second begin time associated with a second communication session of a second remote user;
determining whether the threshold time has elapsed without receiving second end data, wherein the second end data is associated with a second end time associated with the second communication session of the second remote user; and
wherein the second notification comprises data associated with the communication session of the first remote user and the second communication session of the second remote user.

3. The computing system as in claim 1 or 2, wherein the operations further comprise:
obtaining hold data, wherein the hold data is descriptive of a hold time associated with the communication session of the first remote user;
determining whether the hold time is greater than a hold time threshold;
generating a third notification and a fourth notification;
transmitting via the network connection, the third notification to the first remote user; and
transmitting, via the network connection, the fourth notification to the supervisor.

4. The computing system as in claims 1, 2, or 3, wherein the initial data and the end data are obtained from a remote desktop.

5. The computing system as in claims 1, 2, 3, or 4, wherein the one or more status indicators are descriptive of a threshold status for the communication session.

6. A computer-implemented method for real-time tracking of communication sessions for remote users and notification transmission, the method comprising:
obtaining, via a management console application programming interface and by a computing system comprising one or more processors, communication session data associated with a communication session of a first remote user from a remote computing device;
obtaining initial data, wherein the initial data is associated with a begin time of a communication session of the first remote user;
determining whether a threshold time has elapsed without receiving end data of the communication session of the first remote user, wherein the end data is associated with an end time;
generating based on the threshold time lapsing, by the computing system, a first notification, wherein the first notification is descriptive of at least a portion of the communication session data;
providing, via an agent user interface and by the computing system, the first notification to the first remote user;
determining, by the computing system, whether the communication session data comprises time data associated with a threshold time having elapsed;
generating, by the computing system, a second notification based on the threshold time having elapsed, wherein the second notification comprises session information, wherein the session information comprises data associated with the first remote user and at least a portion of the communication session data; and
providing, via a supervisor user interface and by the computing system, the second notification to a supervisor.

7. The computer-implemented method of claim 6 further comprises:
accessing, via a real-time automation bot, a remote desktop of a remote user;
identifying, via the real-time automation bot, a plurality of user communication datasets on the remote desktop of the remote user;
obtaining, via the real-time automation bot, the identified plurality of user communication datasets;
in response to obtaining the plurality of user communication datasets, deleting, via the real-time automation bot, the plurality of user communication datasets from the remote desktop.

8. The computer-implemented method as in claim 6, wherein the remote computing device is associated with the first remote user, and wherein the first remote user and the supervisor are in different locations.

9. The computer-implemented method as in claims 6 or 8 wherein the communication session data comprises:
an elapsed communication time descriptive of overall length of time of a communication session;
a hold time descriptive of overall length of time of a third user being put on hold; and
a wait time descriptive of overall length of time of a fourth user being put on hold.

10. The computer-implemented method of claim 6 further comprises:
obtaining a plurality of user specific datasets associated with a plurality of respective remote users;
determining whether a user trigger event occurred based at least in part on the plurality of user specific datasets, wherein the user trigger event comprises one or more remote users of the plurality of respective remote users logging out of a remote user interface before a preset time;
generating an additional notification based on the user trigger event; and
providing, via the user interface, the additional notification.

11. A computing system comprising means for carrying out the method of claim 6.

## Patentansprüche

1. Ein Computersystem zur automatisierten Verfolgung von Kommunikationssitzungen für Remote-Benutzer, wobei das Computersystem umfasst:
A) einen oder mehrere Prozessoren; und
B) ein oder mehrere nichtflüchtige, computerlesbare Speichermedien, die gemeinsam Befehle speichern, die, wenn sie von dem einen oder den mehreren Prozessoren ausgeführt werden, das Computersystem dazu veranlassen, Operationen durchzuführen, wobei die Operationen Folgendes umfassen:
B1) Erfassen von Anfangsdaten, wobei die Anfangsdaten einem Startzeitpunkt einer Kommunikationssitzung eines ersten Remote-Benutzers zugeordnet sind;
B2) Feststellen, ob eine Schwellenzeit verstrichen ist, ohne dass Enddaten der Kommunikationssitzung des ersten Remote-Benutzers empfangen wurden, wobei die Enddaten mit einem Endzeitpunkt verbunden sind;
B3) Erzeugen einer ersten Benachrichtigung und einer zweiten Benachrichtigung auf der Grundlage des Verstreichens der Schwellenzeit,
B3.1) wobei die erste Benachrichtigung einen oder mehrere Statusindikatoren umfasst, die der Kommunikationssitzung des ersten Remote-Benutzers zugeordnet sind;
B3.2) wobei die zweite Benachrichtigung Daten umfasst, die dem ersten Remote-Benutzer zugeordnet sind, sowie Daten, die der Kommunikationssitzung des ersten Remote-Benutzers zugeordnet sind;
B4) Übertragen der ersten Benachrichtigung über eine Netzwerkverbindung an den ersten Remote-Benutzer;
B5) Übertragen der zweiten Benachrichtigung über die Netzwerkverbindung an einen Vorgesetzten des ersten Remote-Benutzers;
B6) Erzeugen von Sitzungsdaten, wobei die Sitzungsdaten Informationen umfassen, die der Kommunikationssitzung des ersten Remote-Benutzers zugeordnet sind; und
B7) Speichern der Sitzungsdaten.

2. Das Computersystem nach Anspruch 1, wobei die Operationen ferner Folgendes umfassen:
Ermitteln zweiter Anfangsdaten, wobei die zweiten Anfangsdaten einem zweiten Startzeitpunkt zugeordnet sind, der einer zweiten Kommunikationssitzung eines zweiten Remote-Benutzers zugeordnet ist;
Feststellen, ob die Schwellenzeit verstrichen ist, ohne dass zweite Enddaten empfangen wurden, wobei die zweiten Enddaten einer zweiten Endzeit zugeordnet sind, die der zweiten Kommunikationssitzung des zweiten Remote-Benutzers zugeordnet ist; und
wobei die zweite Benachrichtigung Daten umfasst, die der Kommunikationssitzung des ersten Remote-Benutzers und der zweiten Kommunikationssitzung des zweiten Remote-Benutzers zugeordnet sind.

3. Das Computersystem nach Anspruch 1 oder 2, wobei die Operationen ferner Folgendes umfassen:
Ermitteln von Wartezeitdaten, wobei die Wartezeitdaten eine Wartezeit beschreiben, die der Kommunikationssitzung des ersten Remote-Benutzers zugeordnet ist;
Feststellen, ob die Wartezeit größer ist als ein Wartezeit-Schwellenwert;
Erzeugen einer dritten Benachrichtigung und einer vierten Benachrichtigung;
Übertragen der dritten Benachrichtigung über die Netzwerkverbindung an den ersten Remote-Benutzer; und
Übertragen der vierten Benachrichtigung über die Netzwerkverbindung an den Vorgesetzten.

4. Das Computersystem nach Anspruch 1, 2 oder 3, wobei die Anfangsdaten und die Enddaten von einem Remote-Desktop abgerufen werden.

5. Das Computersystem nach Anspruch 1, 2, 3 oder 4, wobei der eine oder die mehreren Statusindikatoren einen Schwellenwertstatus für die Kommunikationssitzung beschreiben.

6. Ein computerimplementiertes Verfahren zur Echtzeit-Verfolgung von Kommunikationssitzungen für Remote-Benutzer und zur Übertragung von Benachrichtigungen, wobei das Verfahren Folgendes umfasst:
Abrufen von Kommunikationssitzungsdaten, die einer Kommunikationssitzung eines ersten Remote-Benutzers zugeordnet sind, von einem Remote-Computergerät über eine Anwendungsprogrammierschnittstelle (API) einer Verwaltungskonsole und durch ein Computersystem, das einen oder mehrere Prozessoren umfasst;
Abrufen von Anfangsdaten, wobei die Anfangsdaten einem Startzeitpunkt einer Kommunikationssitzung des ersten Remote-Benutzers zugeordnet sind;
Feststellen, ob eine Schwellenzeit verstrichen ist, ohne dass Enddaten der Kommunikationssitzung des ersten Remote-Benutzers empfangen wurden, wobei die Enddaten einem Endzeitpunkt zugeordnet sind;
Erzeugen einer ersten Benachrichtigung durch das Computersystem auf der Grundlage des Verstreichens der Schwellenzeit, wobei die erste Benachrichtigung zumindest einen Teil der Kommunikationssitzungsdaten beschreibt;
Bereitstellen der ersten Benachrichtigung an den ersten Remote-Benutzer über eine Agenten-Benutzeroberfläche und durch das Computersystem;
Feststellen durch das Computersystem, ob die Kommunikationssitzungsdaten Zeitdaten umfassen, die einer verstrichenen Schwellenzeit zugeordnet sind;
Erzeugen einer zweiten Benachrichtigung durch das Computersystem auf der Grundlage des Verstreichens der Schwellenzeit, wobei die zweite Benachrichtigung Sitzungsinformationen umfasst, wobei die Sitzungsinformationen Daten umfassen, die dem ersten Remote-Benutzer zugeordnet sind, sowie zumindest einen Teil der Kommunikationssitzungsdaten; und
Bereitstellen der zweiten Benachrichtigung über eine Vorgesetzten-Benutzeroberfläche und durch das Computersystem an einen Vorgesetzten.

7. Das computerimplementierte Verfahren nach Anspruch 6 umfasst ferner:
Zugreifen auf einen Remote-Desktop eines Remote-Benutzers über einen Echtzeit-Automatisierungsbot;
Erkennen einer Mehrzahl von Benutzerkommunikationsdatensätzen auf dem Remote-Desktop des Remote-Benutzers über den Echtzeit-Automatisierungsbot;
Abrufen der erkannten Mehrzahl von Benutzerkommunikationsdatensätzen über den Echtzeit-Automatisierungsbot;
Löschen der Mehrzahl von Benutzerkommunikationsdatensätzen vom Remote-Desktop über den Echtzeit-Automatisierungsbot als Reaktion auf das Abrufen der Mehrzahl von Benutzerkommunikationsdatensätzen.

8. Das computerimplementierte Verfahren nach Anspruch 6, wobei das Remote-Computergerät dem ersten Remote-Benutzer zugeordnet ist und wobei sich der erste Remote-Benutzer und der Vorgesetzte an unterschiedlichen Standorten befinden.

9. Das computerimplementierte Verfahren nach Anspruch 6 oder 8, wobei die Kommunikationssitzungsdaten Folgendes umfassen:
eine verstrichene Kommunikationszeit, die die Gesamtdauer einer Kommunikationssitzung beschreibt;
eine Haltezeit, die die Gesamtdauer beschreibt, während der ein dritter Benutzer in eine Warteschleife gelegt wurde; und
eine Wartezeit, die die Gesamtdauer beschreibt, während der ein vierter Benutzer in eine Warteschleife gelegt wurde.

10. Das computerimplementierte Verfahren nach Anspruch 6 umfasst ferner:
Ermitteln einer Mehrzahl von benutzerspezifischen Datensätzen, die einer Mehrzahl von jeweiligen Remote-Benutzern zugeordnet sind;
Feststellen, ob ein Benutzerauslöseereignis eingetreten ist, zumindest teilweise auf der Grundlage der Mehrzahl von benutzerspezifischen Datensätzen, wobei das Benutzerauslöseereignis umfasst, dass sich ein oder mehrere Remote-Benutzer aus der Mehrzahl der jeweiligen Remote-Benutzer vor einer voreingestellten Zeit von einer Remote-Benutzerschnittstelle abmelden;
Erzeugen einer zusätzlichen Benachrichtigung auf der Grundlage des Benutzer-Auslöseereignisses; und
Bereitstellen der zusätzlichen Benachrichtigung über die Benutzerschnittstelle.

11. Ein Computersystem, das Mittel zur Durchführung des Verfahrens nach Anspruch 6 umfasst.

## Revendications

1. Un système informatique pour le suivi automatisé de sessions de communication d'utilisateurs distants, le système informatique comprenant :
A) un ou plusieurs processeurs ; et
B) un ou plusieurs supports non transitoires lisibles par ordinateur qui stockent collectivement des instructions qui, lorsqu'elles sont exécutées par le ou les processeurs, amènent le système informatique à exécuter des opérations, les opérations comprenant :
B1) l'obtention de données initiales, les données initiales étant associées à un instant de début d'une session de communication d'un premier utilisateur distant ;
B2) la détermination visant à établir si une durée seuil s'est écoulée sans réception de données de fin de la session de communication du premier utilisateur distant, les données de fin étant associées à un instant de fin ;
B3) la génération d'une première notification et d'une deuxième notification sur la base de l'écoulement de la durée seuil,
B3.1) la première notification comprenant un ou plusieurs indicateurs d'état associés à la session de communication du premier utilisateur distant ;
B3.2) la deuxième notification comprenant des données associées au premier utilisateur distant et des données associées à la session de communication du premier utilisateur distant ;
B4) la transmission, par l'intermédiaire d'une connexion réseau, de la première notification au premier utilisateur distant ;
B5) la transmission, par l'intermédiaire de la connexion réseau, de la deuxième notification à un superviseur du premier utilisateur distant ;
B6) la génération de données de session, les données de session comprenant des informations associées à la session de communication du premier utilisateur distant ; et
B7) le stockage des données de session.

2. Le système informatique selon la revendication 1, dans lequel les opérations comprennent en outre :
l'obtention de deuxièmes données initiales, les deuxièmes données initiales étant associées à un deuxième instant de début associé à une deuxième session de communication d'un deuxième utilisateur distant ;
la détermination visant à établir si la durée seuil s'est écoulée sans réception de deuxièmes données de fin, les deuxièmes données de fin étant associées à un deuxième instant de fin associé à la deuxième session de communication du deuxième utilisateur distant ;
et dans lequel la deuxième notification comprend des données associées à la session de communication du premier utilisateur distant et à la deuxième session de communication du deuxième utilisateur distant.

3. Le système informatique selon la revendication 1 ou 2, dans lequel les opérations comprennent en outre :
l'obtention de données de mise en attente, les données de mise en attente étant représentatives d'une durée de mise en attente associée à la session de communication du premier utilisateur distant ;
la détermination visant à établir si la durée de mise en attente est supérieure à un seuil de durée de mise en attente ;
la génération d'une troisième notification et d'une quatrième notification ;
la transmission, par l'intermédiaire de la connexion réseau, de la troisième notification au premier utilisateur distant ; et
la transmission, par l'intermédiaire de la connexion réseau, de la quatrième notification au superviseur.

4. Le système informatique selon l'une quelconque des revendications 1, 2 ou 3, dans lequel les données initiales et les données de fin sont obtenues à partir d'un bureau distant.

5. Le système informatique selon l'une quelconque des revendications 1, 2, 3 ou 4, dans lequel le ou les indicateurs d'état sont représentatifs d'un état de seuil pour la session de communication.

6. Un procédé mis en œuvre par ordinateur pour le suivi en temps réel de sessions de communication d'utilisateurs distants et la transmission de notifications, le procédé comprenant :
l'obtention, par l'intermédiaire d'une interface de programmation d'applications de console de gestion et par un système informatique comprenant un ou plusieurs processeurs, à partir d'un dispositif informatique distant, de données de session de communication associées à une session de communication d'un premier utilisateur distant ;
l'obtention de données initiales, les données initiales étant associées à un instant de début d'une session de communication du premier utilisateur distant ;
la détermination visant à établir si une durée seuil s'est écoulée sans réception de données de fin de la session de communication du premier utilisateur distant, les données de fin étant associées à un instant de fin ;
la génération, par le système informatique et sur la base de l'écoulement de la durée seuil, d'une première notification, la première notification étant représentative d'au moins une partie des données de session de communication ;
la fourniture, par l'intermédiaire d'une interface utilisateur d'agent et par le système informatique, de la première notification au premier utilisateur distant ;
la détermination, par le système informatique, visant à établir si les données de session de communication comprennent des données temporelles associées au fait qu'une durée seuil s'est écoulée ;
la génération, par le système informatique, d'une deuxième notification sur la base de l'écoulement de la durée seuil, la deuxième notification comprenant des informations de session, les informations de session comprenant des données associées au premier utilisateur distant et au moins une partie des données de session de communication ; et
la fourniture, par l'intermédiaire d'une interface utilisateur de superviseur et par le système informatique, de la deuxième notification à un superviseur.

7. Le procédé mis en œuvre par ordinateur selon la revendication 6, comprenant en outre :
l'accès, par l'intermédiaire d'un robot d'automatisation en temps réel, à un bureau distant d'un utilisateur distant ;
l'identification, par l'intermédiaire du robot d'automatisation en temps réel, d'une pluralité de jeux de données de communication d'utilisateur sur le bureau distant de l'utilisateur distant ;
l'obtention, par l'intermédiaire du robot d'automatisation en temps réel, de la pluralité identifiée de jeux de données de communication d'utilisateur ;
en réponse à l'obtention de la pluralité de jeux de données de communication d'utilisateur, la suppression, par l'intermédiaire du robot d'automatisation en temps réel, de la pluralité de jeux de données de communication d'utilisateur du bureau distant.

8. Le procédé mis en œuvre par ordinateur selon la revendication 6, dans lequel le dispositif informatique distant est associé au premier utilisateur distant, et dans lequel le premier utilisateur distant et le superviseur se trouvent à des emplacements différents.

9. Le procédé mis en œuvre par ordinateur selon la revendication 6 ou 8, dans lequel les données de session de communication comprennent :
une durée de communication écoulée représentative de la durée totale d'une session de communication ;
une durée de mise en attente représentative de la durée totale pendant laquelle un troisième utilisateur est mis en attente ; et
une durée d'attente représentative de la durée totale pendant laquelle un quatrième utilisateur est mis en attente.

10. Le procédé mis en œuvre par ordinateur selon la revendication 6, comprenant en outre :
l'obtention d'une pluralité de jeux de données spécifiques à des utilisateurs, associés respectivement à une pluralité d'utilisateurs distants ;
la détermination visant à établir si un événement déclencheur utilisateur s'est produit sur la base, au moins en partie, de la pluralité de jeux de données spécifiques à des utilisateurs, l'événement déclencheur utilisateur comprenant le fait qu'un ou plusieurs utilisateurs distants parmi la pluralité d'utilisateurs distants se déconnectent d'une interface utilisateur distante avant un instant prédéfini ;
la génération d'une notification supplémentaire sur la base de l'événement déclencheur utilisateur ; et
la fourniture, par l'intermédiaire de l'interface utilisateur, de la notification supplémentaire.

11. Un système informatique comprenant des moyens pour mettre en œuvre le procédé selon la revendication 6.
